# EUROPÄISCHE PATENTSCHRIFT

(11) **EP 2 342 680 B1**
(45) Veröffentlichungstag und Bekanntmachung des Hinweises auf die Patenterteilung: **23.11.2016**
(21) Anmeldenummer: 09760455.7
(22) Anmeldetag: 07.10.2009
(51) Int. Cl.: G06K 19/07, G09F 3/00, G06K 19/073

(54) **MOBILER DATENSPEICHER MIT AUTOMATISCHER LÖSCHFUNKTION**
MOBILE DATA MEMORY WITH AUTOMATIC DELETE FUNCTION
MÉMOIRE DONNÉES MOBILE À FONCTION D'EXTINCTION AUTOMATIQUE

(30) Priorität: 07.10.2008 AT 15682008
(43) Veröffentlichungstag der Anmeldung: 13.07.2011
(73) Patentinhaber: ASMAG-Holding GmbH, 4645 Grünau im Almtal (AT)
(72) Erfinder: SCHRÖTER, Klaus, 10707 Berlin (DE); CHANG, Ho B., CH-6048 Horw (CH)
(74) Vertreter: Burger, Hannes
(86) Internationale Anmeldenummer: PCT/AT2009/000386
(87) Internationale Veröffentlichungsnummer: WO 2010/040160

(56) Entgegenhaltungen:
- EP-A1- 0 295 985
- WO-A1-03/075227
- US-A- 4 952 913
- US-B1- 6 346 886

## Beschreibung

Die Erfindung betrifft einen mobilen Datenspeicher umfassend ein Datenspeichermodul und eine Halte- bzw. Tragvorrichtung, wobei das Datenspeichermodul einen nicht-flüchtigen, wiederbeschreibbaren Halbleiterspeicher und eine Zugriffssteuerung mit einem Kommunikationsmodul aufweist, wobei ferner das Kommunikationsmodul mit einer Kommunikationsschnittstelle verbunden ist.

Aus dem Stand der Technik ist eine Mehrzahl mobiler Datenspeicher bekannt, die zumeist als nicht flüchtige Halbleiterspeicher ausgebildet sind und durch eine kompakte Anordnung in einem Gehäuse leicht transportabel ausgebildet sind. Beispielsweise sind so genannte USB-Sticks bekannt, bei der ein nicht flüchtiger Halbleiterspeicher in einem Gehäuse angeordnet ist und über eine serielle Kommunikationsschnittstelle mit einer Datenverarbeitungseinrichtung verbunden werden kann. Derartige Datenspeicher werden zumeist von einer Person mitgeführt, bspw. in dem sie in eine Aufnahmevorrichtung eines Kleidungsstücks angeordnet sind. Durch diese Art des Mitführen besteht jedoch die Gefahr, dass der Datenspeicher unabsichtlich verloren wird bzw. in missbräuchlicher Absicht dem Eigentümer entwendet wird. In diesem Fall kann nun ein Dritter ungehindert auf die hinterlegten Daten zugreifen und dieser in missbräuchlicher Absicht verwenden.

Daher wurden mobile Datenspeicher entwickelt, die derart am Körper getragen werden, dass ein unbeabsichtigtes Verlegen bzw. eine mutwillige Entfernung nicht möglich ist, da dies vom Träger des mobilen Datenspeichers erkannt werden würde.

Beispielsweise zeigt die DE 198 24 643 A1 einen persönlichen Datenring, der in der Form eines Fingerrings ausgebildet ist und eine Mehrzahl unabhängiger Datenspeicherplätze bereitstellt. Dieser Ring funktioniert auf der Basis der Transponder-Technologie und kann daher berührungslos beschrieben bzw. gelesen werden. Die Datenübertragung zum Beschreiben bzw. Auslesen erfolgt dabei mittels des Prinzips der gekoppelten Magnetkreise, also in dem eine Spule des Datenrings in das Magnetfeld eines Lesegeräts gebracht wird. Durch das dem Fachmann bekannte Induktionsprinzip wird elektrische Energie an dem ringförmigen Datenspeicher übertragen und durch entsprechende Ansteuerung bzw. Variation des Magnetfeldes, kommt es aufgrund des Transponderprinzips zu einer entsprechenden Rückmeldung an das Lesegerät, die als Datenübertragung ausgewertet werden kann.

Ein RFID-Merkmal zur Identifikation eines Benutzers zeigt auch die US 2004/0256452 A1. Das RFID-Merkmal wird als Armband getragen und ist somit einem Benutzer zugeordnet. Zur Identifikation des Benutzers legt dieser seine Hand in eine Vorrichtung ein, wobei über eine Auslesevorrichtung das RFID-Merkmal ausgelesen wird. Zusätzlich umfasst die Vorrichtung einen Fingerabdruckscanner und eine Erfassungsvorrichtung für einen Finger- bzw. Handgelenkpuls. Die Erfassungsvorrichtung ist dabei bevorzugt als Handgelenkablage mit Griffstück ausgebildet, sodass die Hand des Benutzers und somit das RFID-Merkmal vor der entsprechenden Auslesevorrichtung positioniert wird und gleichzeitig durch Umgreifen des Griffstücks der Fingerabdruck sowie der Puls des Benutzers erfasst wird.

Die Schrift US 5,764,888 A zeigt einen elektronischen Mikro-Identifikationsschaltkreis der insbesondere derart kompakt ausgebildet ist, dass er bspw. im Volumen einer Münze angeordnet werden kann und somit zur Sicherung eines Informationstransfers bzw. zur Sicherung von Finanztransaktionen geeignet ist. Das elektronische Modul ist derart gesichert, dass es nur der jeweils zugeordnete Benutzer einsetzen bzw. verwenden kann. Der Schaltkreis ist dazu ausgebildet, ein eindeutiges Identifikationsmerkmal eines Benutzers zu speichern und dieses bei einem unautorisierten Zugriff zu löschen. Zur Authentifizierung des Benutzers kann das Datenmodul über eine Drahtverbindung mit einer Auslesevorrichtung verbunden werden, um so einen verschlüsselten Datensatz mit dem hinterlegten Datensatz zu vergleichen.

Das Dokument US 6,346,886 B1 offenbart eine elektronische Identifikationsvorrichtung, bei der ein Transceiver koppelbar mit einer Basis verbunden ist und erfasste Benutzerdaten an eine Empfangsstation überträgt. Insbesondere offenbart das Dokument ein Identifikationsarmband, bei dem ein wiederverwendbarer Transceiver mit einem Armband verbunden werden kann. Das Identifikationsarmband umfasst ein Sicherungsmittel zur Verbindung der beiden Enden des Armbands um den Arm des Patienten, wobei ferner ein Speichermittel integriert im Armband angeordnet ist und nicht ohne Zerstörung der Vorrichtung von dieser entfernt werden kann. Der Transponder ist lösbar mit dem Armband verbunden und hat bei Anordnung am Armband Kontakt mit dem Speicher und kann diesen beschreiben bzw. auslesen. Das Armband inklusive dem Speichermittel ist kostengünstig herstellbar und vollständig entsorgbar. Das Armband weist eine leitfähige Schleife auf, sodass bei Anordnung des Armbandes am Arm des Patienten eine geschlossene Stromschleife gebildet wird und eine Entfernung des Armbandes, also eine Öffnung des Stromkreises, erkannt werden kann. Die Enden des Armbandes werden nach Anlegen an den Arm des Patienten gesichert miteinander verbunden, beispielsweise mittels einer Adhäsiwerbindung, einer Schmelzverbindung oder mittels Crimpen. Insbesondere ist offenbart, dass die elektronische Identifikationsvorrichtung eine Aufnahmebasis aufweist, wobei in der Aufnahmebasis eine Prozessoranordnung angeordnet wird und wobei die Prozessoranordnung einen Sensor aufweist, der eine Zuordnung der Prozessoranordnung zu einem Objekt ermitteln kann.

Auch das Dokument EP 0 295 985 A1 offenbart ein Identifikationsarmband, welches nach Empfang einer Anforderung ein Signal absendet, welches eine Identifikation des Armbandes und damit der Person ermöglicht. Ferner ist offenbart, dass das Armband einen Lichtleiter aufweist, der bei Anlegen des Armbandes an den Arm einer Person einen geschlossenen Lichtkreislauf ausbildet und somit ein Öffnen des Armbandes eine Unterbrechung des Lichtkreises bewirkt. Von einem Computer wird ein zufälliges Signal generiert und an das Armband übermittelt, welches daraufhin eine entsprechende Rückantwort sendet. Da im Armband eine optische Faser angeordnet ist, ist eine Unterbrechung des Lichtkreises nicht möglich ohne dass dies erkannt wird, wodurch eine hohe Missbrauchssicherheit gegeben ist. Insbesondere ist offenbart, dass im Armband ein Mikroprozessor vorhanden ist, der eine empfangene Information mittels eine Algorithmus aufbereitet und über einen Transceiver zurück an den sendenden Computer übermittelt. Wird im optischen Kreis des Armbandes eine Unterbrechung festgestellt, beendet der Mikroprozessor seine Arbeit, was vom empfangenden Computer festgestellt werden kann.

Die Dokumente zum Stand der Technik zeigen mobile Datenspeicher die an einem Benutzer angeordnet sind bzw. einem Benutzer eindeutig zugeordnet sind und ferner dazu ausgebildet sind, Information zu speichern und diese über eine Lesevorrichtung auslesbar bereitstellen zu können. Die Information ist dabei zumeist in einem nicht flüchtigen Speicher hinterlegt und bleibt insbesondere so lange gültig, bis sie von der externen Auslesevorrichtung gelöscht bzw. geändert wird. Des Weiteren zeigt der Stand der Technik eine Ausbildung, bei der vor Zugriff auf die Speichereinheit bzw. auf die hinterlegte Information, die Zuordnung des mobilen Datenspeichers zu einer Person geprüft wird. Von Nachteil der bekannten Vorrichtung ist insbe sondere, dass die Information in den Speichereinheiten vorhanden bleibt, bis in einem nachfolgenden Zugriffsschritt die Zuordnung zum Benutzer geprüft wird. Insbesondere besteht die

Gefahr, dass der mobile Datenspeicher in missbräuchlicher Absicht ausgelesen werden kann, bspw. in dem unter Ausschaltung bzw. Umgehung vorhandener Sicherheitsmechanismen, das Speichermittel direkt ausgelesen wird. Insbesondere ist es somit möglich, den Datenspeicher von einer Person zu einer anderen zu übertragen und somit die Erfassungsvorrichtung zu überlisten und missbräuchlicher Weise Zugriff auf die hinterlegten Daten zu bekommen.

Die Aufgabe der Erfindung liegt nun darin, einen mobilen Datenspeicher zu schaffen, der derart kompakt ausgebildet ist, dass er von einer Person getragen werden kann, ohne dass es dadurch zu einer Einschränkung der Bewegungsfreiheit kommt. Insbesondere ist es Aufgabe der Erfindung den mobilen Datenspeicher derart auszubilden, dass ein Verlust der Zuordnung des mobilen Datenspeichers zu einer Person erkannt wird und darauf basierend, Sicherungsaktionen betreffend die hinterlegte Information getroffen werden können.

Die Aufgabe der Erfindung wird nun dadurch gelöst, dass die Halte- bzw. Tragvorrichtung eine Kontakterfassungseinrichtung aufweist, die von einem Zuordnungsüberwachungsmodul des Datenspeichermoduls ausgewertet wird und wobei ferner das Zuordnungsüberwachungsmodul mit dem Halbleiterspeicher und/oder mit der Zugriffssteuerung verbunden ist.

Die Halte- bzw. Tragvorrichtung ist bevorzugt derart ausgebildet, dass sie am Benutzer angeordnet werden kann und eine Zuordnung in der Art sicherstellt, dass dadurch die Bewegungsfreiheit des Benutzers nicht eingeschränkt wird. Insbesondere ist dadurch ferner sichergestellt, dass es bei den üblichen Bedienhandlungen des Benutzers zu keiner Beschädigung und insbesondere zu keinem unbeabsichtigten Abstreifen der Halte- bzw. Tragvorrichtung kommt. Die Kontakterfassungseinrichtung ist ebenfalls derart ausgebildet, dass eine zuverlässige Erfassung des Kontakts mit der Person gegeben ist, insbesondere dass es durch die üblichen Bedienhandlungen des Benutzers zu keiner unbeabsichtigten Aufhebung der Zuordnung kommen kann.

Das Zuordnungsüberwachungsmodul kann nun periodisch die Anordnung der Trag- bzw. Haltevorrichtung am Benutzer prüfen, wobei das Überprüfungsintervall derart gewählt ist, dass ein Entfernen von einer Person bzw. das Anordnen an einer Person zuverlässig erkannt wird. Im Hinblick auf einen kompakten Aufbau und eine hohe Einsatzdauer ist es von besonderer Bedeutung, wenn das Zuordnungsüberwachungsmodul, insbesondere jedoch das Datenspeichermodul, im Ruhemodus keinen, oder nur einen sehr geringen Energiebedarf aufweist, da am erfindungsgemäßen mobilen Datenspeicher ggf. nur sehr wenig Volumen für die Anordnung eines elektrischen Energiespeichers vorhanden ist.

Gemäß einer erfindungsgemäßen Ausbildung ist das Zuordnungsüberwachungsmodul mit dem Halbleiterspeicher verbunden und ist somit unmittelbar dazu ausgebildet, beim Erkennen des Verlusts einer Zuordnung des Datenspeichers zu einem Benutzer, direkt auf den Halbleiterspeicher zugreifen zu können, um somit die Information zu löschen bzw. den Halbleiterspeicher derart zu beeinflussen, dass die hinterlegte Information unbrauchbar bzw. nicht zugreifbar wird.

Es ist jedoch auch möglich, dass das Zuordnungsüberwachungsmodul mit der Zugriffssteuerung verbunden ist, welche wiederum mit dem Halbleiterspeicher verbunden ist, um auch über diese Verbindung eine Unbrauchbarmachung der Information im Halbleiterspeicher auslösen bzw. durchführen zu können.

Wesentlich ist jedenfalls, dass das Zuordnungsüberwachungsmodul bei Erkennen eines Zuordnungsverlusts selbsttätig und insbesondere unabhängig von einer externen Erfassungs- bzw. Zugriffseinrichtung einen weiteren Zugriff auf die Information im Halbleiterspeicher verhindern kann bzw. die Information derart unbrauchbar zu machen, dass sie nicht wieder herstellbar wird.

In einer weiteren Ausbildung ist es möglich, dass das Datenspeichermodul auf der Halte- bzw. Tragvorrichtung angeordnet bzw. in diese integriert ist. Dadurch lassen sich besonders kompakte Abmessungen des erfindungsgemäßen mobilen Datenspeichers realisieren.

Für den erfindungsgemäßen mobilen Datenspeicher ist es von besonderer Bedeutung, wenn dieser bei der Anordnung auf einer Person nicht augenscheinlich als solcher erkannt wird und somit die wesentliche Funktion einem potenziellen Angreifer weitestgehend verborgen bleibt. Beispielsweise kann der Datenspeicher als Zutrittskontrolleinrichtung verwendet werden, wobei es von Bedeutung ist, wenn es für einen Dritten nicht erkennbar ist, welche Vorrichtung einem Benutzer den Zugriff bzw. Zutritt zu einer Einrichtung gestattet. Daher ist eine Ausbildung von ganz besonderem Vorteil, nach der die Trag- bzw. Haltevorrichtung als Gegenstand des täglichen Gebrauchs, insbesondere als Schmuckgegenstand, ausgebildet ist. Schmuckgegenstände können bspw. Ringe, Armbänder sowie Uhren sein, die von einer Person üblicherweise getragen werden und somit nicht sofort augenfällig in Erscheinung treten. Schmuckgegenstände haben den weiteren Vorteil, dass sie zumeist einen sehr guten Kontakt mit der Person haben und somit auch bei den normalen Bedienhandlungen bzw. Bewegungen einer Person die Gefahr gering ist, dass die Zuordnung zur Person verloren geht und damit erfindungsgemäß die Information im mobilen Datenspeicher unbrauchbar gemacht werden würde. Im weitesten Sinn umfassen Schmuckgegenstände all jene Dinge des täglichen Gebrauchs, die derart am Körper getragen werden, dass sie einem Dritten nicht als ungewöhnlich auffallen und einen zuverlässigen Kontakt mit der Person sicherstellen.

Beispielsweise hat eine Ausbildung als Fingerring den Vorteil, dass dieser bevorzugt auch in den Nachtstunden getragen wird und somit die Zuordnung zur Person erhalten bleibt.

Nach einer Weiterbildung kann die Halte- bzw. Tragvorrichtung auch durch eine manschettenartige Vorrichtung gebildet sein. Eine derartige Vorrichtung umfasst bspw. ein Befestigungsband, welches eine durchmesservariable Anordnung am Körper ermöglicht. Eine mögliche Ausbildung ist bspw. ein Brustgurt, es ist jedoch auch eine Anordnung bspw. am Oberarm oder am Fußgelenk möglich. Diese Ausbildung ermöglich eine für Dritte weitestgehend unsichtbare Anordnung an einer Person.

Die Erfassung der Zuordnung des mobilen Datenspeichers zu einer Person kann gemäß einer anspruchsgemäßen Weiterbildung bspw. dadurch erfolgen, dass die Kontakterfassungseinrichtung einen Schaltkontakt aufweist. Bevorzugt wird dieser Schaltkontakt durch den Kontakt mit einem Körperteil betätigt. Da die Halte- bzw. Tragvorrichtung bevorzugt an einem Körperteil anliegt und dieser Körperteil somit mit einer bestimmten mechanischen Kraft einen Druck auf die Halte- bzw. Tragvorrichtung ausübt, kann diese Krafteinwirkung dazu verwendet werden, einen Schaltkontakt zu betätigen. Beispielsweise ist eine Ausbildung als Springkontakt möglich, was den Vorteil hat, dass nach einer erstmaligen Betätigung mit einem erhöhten Kraftwert, nur eine sehr geringe Kraft erforderlich ist, um den Kontakt in der Betätigungsstellung zu halten. Bei der Anordnung der Halte- bzw. Tragvorrichtung am Körperteil wird somit der Kontakt betätigt und bleibt somit insbesondere bis zu einem späteren Entfernen aufrecht.

Die anspruchsgemäß weitergebildete Kontakterfassungseinrichtung kann jedoch auch dahingehend ausgebildet sein, dass eine Kontaktgabe bei Entfernung des mobilen Datenspeichers erfolgt. Bei einer Ausbildung als Fingerring muss dieser beim Abnehmen über das Fingergelenk gestreift werden, wobei die Änderung des Durchmessers des Fingers zur Betätigung eines Schaltkontakts genützt werden kann.

Eine weitere mögliche Ausbildung zur Erfassung der Zuordnung des mobilen Datenspeichers zu einer Person ist auch dadurch möglich, dass die Kontakterfassungseinrichtung eine dielektrische Messvorrichtung aufweist, die dazu ausgebildet ist, dielektrische Verschiebungsströme zu erfassen. Dabei wird die Körperoberfläche mit einem elektrischen Feld beaufschlagt, wobei es durch die Materialeigenschaften des Körpergewebes, insbesondere der Haut, zu einem dielektrischen Verschiebungsstrom kommt, welcher das aufgebrachte elektrische Feld beeinflusst. Diese sehr schwachen dielektrischen Verschiebungsströme sind für die Person völlig ungefährlich und erlauben eine zuverlässige Feststellung der Zuordnung, insbesondere lassen sich auch kleine Veränderungen zuverlässig feststellen.

Eine weitere Möglichkeit zur Erfassung der Zuordnung des mobilen Datenspeichers zu einer Person ist anspruchsgemäß dadurch gebildet, dass die Kontakterfassungseinrichtung eine optische Transmission bzw. Reflexionseinrichtung aufweist. Eine derartige Einrichtung ist bspw. dadurch gebildet, dass von einer optischen Strahlungsquelle ein Lichtstrahl auf die Haut der Person gelenkt wird und von einem Quantendetektor die reflektierte Strahlung bzw. die durch das Gewebe abgeschwächte Strahlung erfasst wird. Durch Wahl des Frequenzbereichs der elektromagnetischen Strahlung lassen dabei sich unterschiedliche Eindringtiefen der elektromagnetischen Strahlung ins Gewebe erreichen. Diese Ausbildung hat den besonderen Vorteil, dass ein unmittelbarer Kontakt mit der Hautoberfläche nicht erforderlich ist, sondern dass auch eine Erfassung aus einem geringen Abstand möglich ist, ohne dadurch die Sicherheit der Zuordnung wesentlich einzuschränken.

In einer Weiterbildung könnte die Kontakterfassungseinrichtung ein weiteres optisches Erfassungsmittel umfassen bzw. die anspruchsgemäß ausgebildete Messeinrichtung dazu ausgebildet sein, einfache biometrische Merkmale erfassen zu können. Beispielsweise kann die Prüfung der Zuordnung erfordern, dass auch Vitalzeichen der Person geprüft werden. Mittels einer optischen Messeinrichtung lässt sich bspw. der Puls einer Person feststellen.

Eine besonders vorteilhafte Weiterbildung ist dadurch gekennzeichnet, dass die Kontakterfassungseinrichtung durch einen piezoelektrischen Kontaktgeber gebildet ist. Ein derartiger Kontaktgeber ist in der Lage bei einer Betätigung, insbesondere bei einer Krafteinwirkung, einen elektrischen Spannungsimpuls abzugeben. Die Halte- bzw. Tragvorrichtung kann nun derart ausgebildet sein, dass es beim Entfernen derselben vom Körper der Person genau zu einer derartigen Krafteinwirkung auf den Kontaktgeber kommt und der entstehende Spannungsimpuls dazu verwendet werden kann, die Informationen im Halbleiterspeicher zu löschen. Durch entsprechende Gestaltung des Kontaktgebers kann der Spannungsimpuls derart gebildet sein, dass ausreichend elektrische Energie zur Verfügung steht, um den Halbleiterspeicher direkt zu löschen bzw. gemäß einer weiteren Ausbildung die Zugriffssteuerung mit ausreichend elektrischer Energie zu versorgen, damit diese den Halbleiterspeicher löschen kann, wobei ggf. eine kurzzeitige Zwischenspeicherung der abgegebenen Energie in einem kapazitiven Energiespeicher möglich ist.

Eine weitere besonders vorteilhafte Weiterbildung erhält man, wenn der Halbleiterspeicher eine Einrichtung aufweist, die zum selbsttätigen Löschen des Speicherinhalts ausgebildet ist. Bekannte Halbleiterspeicher sind üblicherweise derart ausgebildet, dass zum Betrieb, also zum Schreiben bzw. Lesen von Informationen, elektrische Energie erforderlich ist. Insbesondere ist bekannt, dass beim Zugriff eine entsprechende Adressierung der einzelnen Speichereinheiten erfolgen muss. Von ganz besonderem Vorteil ist es nun, wenn der Halbleiterspeicher durch interne konstruktive Maßnahmen derart ausgebildet ist, dass ein Löschvorgang des gesamten Speicherinhalts ohne direkte Speicheradressierung erfolgen kann. Beispielsweise kann im Halbleiterspeicher eine fest verdrahtete Zugriffsschaltung angeordnet sein, die bspw. durch einen Spannungsimpuls an einem ausgezeichneten Steueranschluss eine interne Kettenreaktion auslöst, welche den gesamten Speicherinhalt unwiederbringlich löscht.

Neben einem vollständigen Löschen des Speicherinhalts ist es jedoch auch möglich, dass bspw. ein Inhaltsverzeichnis und/oder eine Zuordnungstabelle im Speicher gelöscht wird. Es kann aber auch eine Zugriffsschaltung umgesteuert werden, wodurch ein Zugriff auf den Speicher hardwaretechnisch verhindert wird.

Nach einer Weiterbildung ist der Halbleiterspeicher als elektrisch löschbarer SchreibLesespeicher ausgebildet was den Vorteil hat, dass ein Anlegen einer elektrischen Spannung an einen ausgezeichneten Anschluss des Halbleiterspeichers, die vollständige Löschung des Speicherinhalts zur Folge hat.

Zur kontinuierlichen Erfassung der Zuordnung des mobilen Datenspeichers zu einer Person kann ggf. eine geringe Menge elektrischer Energie erforderlich sein. Daher ist es von besonderem Vorteil, wenn das Zuordnungsüberwachungsmodul einen Speicher für elektrische Energie aufweist. Dieser Speicher ist bevorzugt zur Speicherung einer derart ausreichenden Menge elektrischer Energie ausgebildet, um das Zuordnungsüberwachungsmodul während der zu erwartenden Betriebsdauer mit elektrischer Energie zu versorgen und somit die Überwachung der Zuordnung des mobilen Datenspeichers zu einer Person zu gewährleisten. Da die am mobilen Datenspeicher hinterlegte Information zumeist nur für eine begrenzte Zeit von Bedeutung ist, bspw. nur für einen Tag, ist nur ein sehr geringer Energiegehalt zur Überbrückung dieser Betriebsdauer erforderlich. Da die zu speichernde elektrische Energiemenge direkt proportional mit dem erforderlichen Volumen ist, der erfindungsgemäße mobile Datenspeicher jedoch besonders bevorzugt sehr kompakt ausgebildet ist, hat diese Ausbildung den Vorteil, dass nur das Zuordnungsüberwachungsmodul mit elektrischer Energie versorgt wird, die Energieintensive Zugriffssteuerung jedoch unversorgt bleibt. Nur bei Bedarf kann bspw. vorgesehen sein, dass das Zuordnungsüberwachungsmodul kurzfristig elektrische Energie für die Zugriffssteuerung bzw. gemäß einer weiteren Ausbildung für den Halbleiterspeicher zur Verfügung stellt, um eine Löschung des Speicherinhaltes durchführen zu können.

Als Energiespeicher eignen sich bspw. Kapazitive Speicher, da diese kleinvolumig ausgebildet sein können und zumeist nur eine sehr geringe Selbstentladung aufweisen. Da der Zugriff auf die hinterlegten Informationseinheiten zumeist nur sehr kurze Zeit in Anspruch nimmt, hat diese Ausbildung den weiteren Vorteil, dass ein derartiger Energiespeicher in sehr kurzer Zeit nachgeladen werden kann, insbesondere in der Zeitspanne des Zugriffs auf die hinterlegte Information.

Da es für den erfindungsgemäßen mobilen Datenspeicher von wesentlicher Bedeutung ist, dass der Speicherinhalt zuverlässig gelöscht wird, ohne dass dazu speichertechnologisch bestimmte Zugriffsverfahren bzw. Methoden eingehalten werden, ist eine Ausbildung von Vorteil, nach der Zuordnungsüberwachungsmodul zur Abgabe eines Spannungsimpulses ausgebildet ist. Mittels dieses Spannungsimpulses kann bspw. der Halbleiterspeicher bzw. die Zugriffssteuerung kurzfristig mit ausreichender elektrischer Energie versorgt werden, um eine vollständige Löschung des Speicherinhalts durchzuführen. Im Hinblick auf eine sicherheitstechnische relevante Weiterbildung könnte der Spannungsimpuls auch dazu verwendet werden, den Halbleiterspeicher unbrauchbar zu machen, bspw. in dem die Speichereinheiten durch den Spannungsimpuls zerstört werden. Beispielsweise könnte für den Halbleiterspeicher ein einmal beschreibbarer Typ verwendet werden, der von einer Ausgabestelle mit Information beschrieben wird und einer Person übergeben und damit zugeordnet wird. Die Information auf einem derartigen Datenspeicher ist somit unbegrenzt gültig und gestattet dem Benutzer somit Zutritt bzw. Zugriff auf gesicherte Einrichtungen bzw. Informationen. Durch Entfernung des Datenspeichers von der Person wird dieser unbrauchbar gemacht und kann somit keinesfalls wieder verwendet werden.

Eine Ausbildung des mobilen Datenspeichers, insbesondere damit der Benutzer in seiner Bewegungsfreiheit nicht eingeschränkt ist, wird dadurch gewährleistet, dass die Kommunikationsschnittstelle zum Aufbau einer drahtlosen Kommunikationsverbindung mit einer Kommunikationsgegenstelle ausgebildet ist. Die drahtlose Kommunikationsverbindung kann nun bspw. durch ein Nahfeldkommunikationssystem gebildet sein, so dass wenn sich der Benutzer mit dem mobilen Datenspeicher im Nahbereich der Kommunikationsgegenstelle aufhält, automatisch und insbesondere ohne Zutun des Benutzers eine Kommunikationsverbindung hergestellt wird. Von besonderer Bedeutung ist es insbesondere, dass ggf. anwesende Dritte diesen ablaufenden Vorgang nicht bemerken und somit ein besonderer Schutz der Person und der am mobilen Datenspeicher hinterlegten Information gegeben ist.

Eine ganz besonders vorteilhafte Weiterbildung erhält man, wenn die drahtlose Kommunikationsverbindung durch die Oberfläche der Haut einer Person gebildet ist. Da der erfindungsgemäße mobile Datenspeicher bevorzugt an einem Körperteil angeordnet ist und somit zumeist direkten Kontakt mit der Haut der Person hat, ist es von besonderem Vorteil, wenn die Haut als Kommunikationsverbindung verwendet wird, da keine zusätzliche Einrichtung bzw. kein zusätzliches Kommunikationsmittel für den Zugriff auf die hinterlegte Information erforderlich ist. Die Haut als Kommunikationsmittel hat ebenfalls den Vorteil, dass somit bspw. durch Berühren eines Gegenstands die Kommunikationsverbindung hergestellt werden kann. Auch ist von Vorteil, dass es somit zu keiner Abstrahlung kommt und es daher Dritten weitestgehend nicht möglich ist, dieses Kommunikationsverbindung abzuhören. Beispielsweise ist es möglich, die Kommunikationsgegenstelle in einem Sitzmöbel anzuordnen, wodurch die Person durch Platznehmen im Sitzmöbel die Kommunikationsverbindung herstellt.

Nach einer Weiterbildung kann die Kommunikationsverbindung durch eine Hochfrequenzfunkverbindung gebildet sein, bspw. durch eine bekannte Kommunikationstechnologie wie Blue-Tooth oder ZigBee, wobei dem Fachmann weitere drahtlose Hochfrequenz-Kommunikationsverbindungen bekannt sind. Insbesondere lässt sich durch Wahl des Frequenzbereichs und der Strahlungsleistung die Reichweite der Kommunikationsverbindung definiert festlegen, sodass sichergestellt werden kann, dass nur in einem begrenzten Nahbereich eine Kommunikationsverbindung hergestellt werden kann.

Eine ganz besonders vorteilhafte Weiterbildung erhält man, wenn die Kommunikationsschnittstelle zur Übertragung von Daten und elektrischer Energie ausgebildet ist. Zum bestimmungsgemäßen Betrieb des mobilen Datenspeichers ist zumeist eine elektrische Energie erforderlich, wobei bevorzugt der Energiebedarf besonders gering ausgebildet ist. Insbesondere ist es nach vorteilhaften Weiterbildungen möglich, dass ein vorhandener Speicher für elektrische Energie nachgeladen werden muss, um während der Zeit des energieautarken Betriebs ausreichend elektrische Energie für den Betrieb des mobilen Datenspeichers zur Verfügung stellen zu können. Die anspruchsgemäße Weiterbildung hat nun den besonderen Vorteil, dass über eine Kommunikationsschnittstelle sowohl ein Datenaustausch mit einer Kommunikationsgegenstelle stattfinden kann und gleichzeitig auch eine Übertragung elektrischer Energie zur Versorgung des mobilen Datenspeichers möglich ist.

Gemäß einer Weiterbildung weist das Datenspeichermodul einen Speicher für elektrische Energie auf, was insbesondere den Vorteil hat, dass Komponenten des mobilen Datenspeichers, beispielsweise die Zugriffssteuerung sowie das Zuordnungsüberwachungsmodul mit elektrischer Energie versorgt werden können, ohne dass dazu eine Verbindung mit einer externen Einrichtung erforderlich ist, insbesondere dass der mobile Datenspeicher nicht im Nahbereich einer derartigen Einrichtung angeordnet sein muss. Dieser Energiespeicher kann beispielsweise durch ein galvanisches Element gebildet sein, aufgrund des bevorzugten geringen Energieverbrauchs des mobilen Datenspeichers, ist jedoch eine Ausbildung möglich, nach der dieser Energiespeicher durch ein kapazitives Element gebildet ist. Gemäß vorteilhafter Weiterbildungen ist es insbesondere gegebenenfalls erforderlich, dass lediglich das Zuordnungsüberwachungsmodul mit elektrischer Energie versorgt werden kann, um so einen Verlust der Zuordnung des mobilen Datenspeichers zu einer Person sofort und zuverlässig sicher stellen zu können und anschließend die Information im Halbleiterspeicher löschen zu können. Des Weiteren wird die Information am mobilen Datenspeicher nur für eine begrenzte Zeit hinterlegt werden, beispielsweise für mehrere Stunden bzw. für einige Tage. Daher kann die bereitzustellende Energie gering gehalten werden, was sich direkt auf das erforderliche Volumen für den elektrischen Energiespeicher auswirkt, wodurch sich dieser besonders leicht im Datenspeichermodul integrieren lässt.

Eine ganz besonders vorteilhafte Weiterbildung erhält man, wenn die Komponenten des Datenspeichermoduls überwiegend durch organische Halbleiterbauteile gebildet sind. Organische Halbleiterbauteile lassen sich insbesondere besonders kostengünstig und einfach herstellen und stellen auch am Ende des Einsatzzeitraums keine Probleme hinsichtlich einer fachgerechten Entsorgung dar. Weiters erlauben organische Halbleiter eine besonders rationelle Fertigung, ohne dass dafür aufwendige bzw. energieintensive Fertigungsschritte erforderlich wären. Auch haben Komponenten aus organischen Halbleiterbauteilen den Vorteil, dass sie wesentlich widerstandsfähiger im Hinblick auf mechanische Verformungen sind und sich somit ohne Gefahr einer Beschädigung auf der Trag- bzw. Haltevorrichtung anordnen lassen.

Ein weiteres Sicherheitsmerkmal stellt eine Weiterbildung dar, nach der im Datenspeichermodul ein personenbezogenes Referenzmerkmal hinterlegt ist. Ein derartiges Merkmal kann bspw. ein eindeutiger elektronischer Schlüssel oder ein biometrisches Referenzmerkmal sein, wobei jedoch auch weitere Merkmale denkbar sind, die sich in einem Datenspeicher ablegen lassen. Damit kann der mobile Datenspeicher auch als persönliches Identifikationsmerkmal dienen, da nach einer Authentifikation durch eine entsprechende Autorität, der Datenspeicher einer Person zugeordnet wird und diese Zuordnung bis zur Abnahme des Datenspeichers erhalten bleibt. Bei einer Zutritts- bzw. Zugriffsautorisierung kann die Kommunikationsgegenstelle ein aktuelles Referenzmerkmal erfassen und es mit dem hinterlegten Merkmal vergleichen und somit die Identität und Authentizität der Person prüfen.

Für sicherheitskritische Anwendungen kann es von Interesse sein, welchen Personen der mobile Datenspeicher bisher zugeordnet war. Daher kann nach einer Weiterbildung im Datenspeichermodul eine Abfolge personenbezogener Referenzmerkmale hinterlegt sein. Nach einer möglichen Ausbildung des mobilen Datenspeichers kann dieser von einer zugeordneten Person an eine andere übergeben werden, die erst nach entsprechender Autorisierung auf die hinterlegte Information zugreifen kann. Bei jeder Autorisierung wird nun anspruchsgemäß ein personenbezogenes Referenzmerkmal in einem Ablaufspeicher abgelegt um so eine Nachverfolgung bspw. im Sinn einer Lesebestätigung zu erreichen. Bevorzugt ist dieser Ablaufspeicher von außen, also von der Kommunikationsgegenstelle, nicht beschreibbar und wird insbesondere auch bei Verlust der Zuordnung nicht geändert.

Die Aufgabe der Erfindung wird auch durch ein Verfahren zur personenbezogenen Hinterlegung von Information auf einem mobilen Datenspeicher gelöst, wobei ein Verlust der Zuordnung des Mobilen Datenspeichers zu einer Person erfasst wird. Durch die Information über den Verlust der Personenzuordnung, können Maßnahmen initiiert werden, die zur Sicherung der am Datenspeicher hinterlegten Information dienen.

Eine Weiterbildung, nach der bei Verlust der Zuordnung, die am Datenspeicher hinterlegte Information selbsttätig gelöscht wird hat den besonderen Vorteil, dass die hinterlegte Information zuverlässig unbrauchbar gemacht wird, sobald der mobile Datenspeicher nicht mehr einer Person zuordenbar ist, ohne dass eine externe Gegenstelle diese Unbrauchbarmachung durchführen bzw. auslösen muss. Es ist somit insbesondere nicht möglich den Datenspeicher von einer Person zu entfernen und durch direkten Zugriff auf das Speichermodul die hinterlegte Information auslesen zu können.

Gemäß einer Weiterbildung wird bei Verlust der Zuordnung, vor einem Zugriff auf die Information, eine Personenauthentifikation durchgeführt. Diese Ausbildung hat den Vorteil dass die hinterlegte Information nicht sofort unbrauchbar gemacht wird, sondern die Person sich erneut autorisieren muss, um auf die Information zugreifen zu können. Ebenso kann der Datenspeicher auch an eine andere Person übergeben werden, die nach erfolgreicher Autorisierung Zugriff auf die Information bekommt. Schlägt diese Authentifikation fehl, können bereits beschriebene Sicherungsmaßnahmen initiiert werden, um die hinterlegte Information unbrauchbar zu machen.

Neben einem Unbrauchbar machen der hinterlegten Information kann es von Vorteil sein, wenn bei Verlust der Zuordnung, der Zugriff auf die hinterlegte Information verhindert wird. Somit ist die Information noch am Datenspeicher hinterlegt, ist aber direkt nicht mehr zugreifbar. Gemäß anderen Weiterbildungen kann nun eine erneute Autorisierung erforderlich sein, um wieder auf die Information zugreifen zu können.

Zum besseren Verständnis der Erfindung wird diese anhand der nachfolgenden Figuren näher erläutert.

Es zeigen jeweils in stark schematisch vereinfachter Darstellung:
- Fig. 1: den erfindungsgemäßen mobilen Datenspeicher;
- Fig. 2: mögliche Ausbildungen des erfindungsgemäßen mobilen Datenspeichers;
- Fig. 3: verschiedene Möglichkeiten, wie der erfindungsgemäße mobile Datenspeicher ausgelesen werden kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

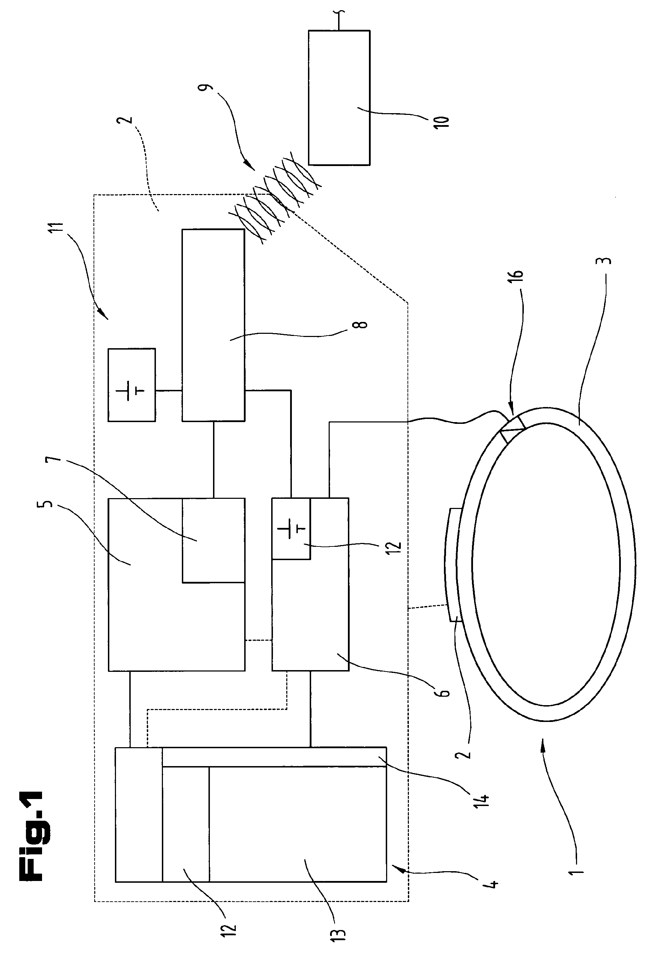

Fig. 1 zeigt den erfindungsgemäßen mobilen Datenspeicher 1, umfassend ein Datenspeichermodul 2, sowie eine Halte- bzw. Tragvorrichtung 3. Das Datenspeichermodul 2 weist einen nicht flüchtigen, wieder beschreibbaren Halbleiterspeicher 4 auf und ist mit der Zugriffssteuerung 5 sowie gegebenenfalls mit dem Zuordnungsüberwachungsmodul 6 verbunden. Die Zugriffssteuerung 5 weist ferner ein Kommunikationsmodul 7 auf, welches mit einer Kommunikationsschnittstelle 8 verbunden ist, die eine bevorzugt drahtlose Kommunikationsverbindung 9 mit einer Kommunikationsgegenstelle 10 aufbaut. Das Datenspeichermodul 2 kann gegebenenfalls noch einen Speicher 11 für elektrische Energie aufweisen, der bevorzugt mit der Kommunikationsschnittstelle 8 verbunden ist. Über die Kommunikationsverbindung 9, die bevorzugt bidirektional ausgebildet ist und insbesondere bevorzugt zur Übertragung von Daten und elektrischer Energie ausgebildet ist, wird der elektrische Energiespeicher 11 nach Auftrennen von Daten und Energieübertragung mit elektrischer Energie versorgt. Insbesondere ist die Kommunikationsschnittstelle 8 bzw. das Kommunikationsmodul 7 dazu ausgebildet, die über die Kommunikationsverbindung 9 übertragene elektrische Energie geregelt in den elektrischen Energiespeicher 11 umzuleiten und diesen somit in einer definierten Art und Weise zu laden.

Nach einer Weiterbildung kann auch das Zuordnungsüberwachungsmodul 6 einen Speicher 12 für elektrische Energie aufweisen. Diese Ausbildung hat insbesondere den besonderen Vorteil, dass das Zuordnungsüberwachungsmodul 6 kontinuierlich die Zuordnung der Halte- bzw. Tragvorrichtung 3 zu einer Person überwachen kann und bei Verlust dieser Zuordnung, den Speicherinhalt im Halbleiterspeicher 4 selbsttätig löschen kann, ohne dass dafür beispielsweise ein Betrieb der Zugriffssteuerung 5 erforderlich wäre. Insbesondere ist ein Löschen des Speicherinhalts somit auch ohne Kommunikationsverbindung 9 mit einer Kommunikationsgegenstelle 10 möglich. Im Gegensatz zum bekannten Stand der Technik ist dies von ganz besonderem Vorteil, da somit der Speicherinhalt sofort beim Verlust der Zuordnung unbrauchbar gemacht wird und nicht bis zu einer erneuten Verbindung mit einer Kommunikationsgegenstelle erhalten bleibt, wodurch bis dahin beispielsweise ein missbräuchlicher Zugriff auf den Speicherinhalt möglich wäre bspw. in dem der Halbleiterspeicher direkt ausgelesen wird.

Besonders bevorzugt sind alle Komponenten des mobilen Datenspeichers auf besonders niedrigen Energieverbrauch ausgelegt. Insbesondere kann bspw. die Zugriffssteuerung als lowpower Microcontroller ausgebildet sein.

Die Löschung des Speicherinhalts kann nun auf mehrere Arten erfolgen. Bei Verwendung eines Halbleiterspeichers 4, wie dieser aus mobilen Datenspeichern bekannt ist, können die hinterlegten Informationseinheiten einmal dadurch gelöscht werden, dass beispielsweise das Inhaltsverzeichnis 13 des Speichers gelöscht wird, wodurch der Zusammenhang zu den Informationseinheiten 14 verloren geht. Findige Angreifer könnten nun jedoch trotzdem die Informationseinheiten 14 auslesen und so die eigentlich gelöschten Informationen wieder herstellen. Daher besteht eine weitere Möglichkeit der Speicherlöschung darin, dass sowohl das Inhaltsverzeichnis 13, als auch die einzelnen Informationseinheiten mit ungültigen Daten überschrieben werden. Diese beiden Vorgänge werden bevorzugt von der Zugriffssteuerung 5 durchgeführt, die dazu auf den Speicher 4 zugreift und die einzelnen Informationseinheiten adressiert und gegebenenfalls mit ungültiger Information überschreibt. Dieser Vorgang benötigt einmal eine bestimmte Zeit und zusätzlich elektrische Energie, um die Zugriffssteuerung 5 sowie den Halbleiterspeicher 4 betreiben zu können. In einer besonders vorteilhaften Weiterbildung weist nun der Halbleiterspeicher 4 eine so genannte Löschvorrichtung 15 auf, die baulich derart in den Speicher integriert angeordnet ist, dass diese Vorrichtung direkten und unmittelbaren Zugriff auf alle Informationseinheiten hat und diese auf einen Schlag, ohne einzelne Adressierung der Speichereinheiten löschen kann. Ein Speicherelement eines Halbleiterspeichers wird beispielsweise durch einen kleinen Ladungsspeicher gebildet, insbesondere einen so genannten Feld-Effekt-Transistor, der beispielsweise einen zusätzlichen Anschluss in der Ladezone angeordnet haben kann, über den die Ladung und somit die gespeicherte Information schnell abgeleitet werden kann. Diese Löschvorrichtung 15 kann nun beispielsweise derart ausgebildet sein, dass ein Spannungsimpuls an einem entsprechend zugeordneten Anschluss den Löschvorgang auslöst, der ohne weiteres Zutun selbsttätig die Speichereinheiten durchläuft und somit den Halbleiterspeicher 4 löscht. Beispielsweise kann das Zuordnungsüberwachungsmodul elektrische Energie aus dem Energiespeicher 12 dazu verwenden, diesen Spannungsimpuls zu erzeugen. Wesentlich am erfindungsgemäßen mobilen Datenspeicher ist jedoch, dass der Verlust der Zuordnung des Datenspeichers zu einem Benutzer, automatisch und selbsttätig die hinterlegte Information unbrauchbar macht, sei es durch vollständiges oder teilweises Löschen, oder durch Überschreiben mit ungültigen Daten.

Da der mobile Datenspeicher bevorzugt derart ausgebildet ist, dass die eigentliche Funktion einem Dritten verborgen bleibt, wird die Trag- bzw. Haltevorrichtung 3 bevorzugt derart ausgebildet sein, dass diese als üblicher persönlicher Gegenstand des täglichen Gebrauchs in Erscheinung tritt. Bevorzugt ist eine Ausbildung als Fingerring bzw. Armreif, Armband oder Armuhr, da derartige Gegenstände, insbesondere Schmuckgegenstände, von einer Person üblicherweise getragen werden und somit nicht sonderlich auffallen und ferner zumeist einen guten Kontakt zur Körperoberfläche haben. Insbesondere sind bei derartigen Gegenständen jedoch Bedienhandlungen erforderlich, um den Gegenstand vom Körper zu entfernen. Bei einer manschettenartigen Tragvorrichtung bspw. einem Armband, muss ein Verschluss geöffnet werden, um das Armband abnehmen zu können. Ein Ring muss beispielsweise über die, durch ein Fingergelenk gebildete Engstelle gezogen werden. Da die Halte- bzw. Tragvorrichtung 3 eine Kontakterfassungseinrichtung 16 aufweist, kann nun diese ausgezeichnete Aktion dazu verwendet werden, die Kontakterfassungseinrichtung zu aktivieren. Gemäß beschriebener Weiterbildungen kann die Kontakterfassungseinrichtung 16 beispielsweise durch einen Schaltkontakt, insbesondere einen Springkontakt, gebildet sein, es ist jedoch auch eine Ausbildung bspw. als piezoelektrischer Kontaktgeber möglich. Diese Ausbildungen setzen eine einwirkende Kraft in ein elektrisches Ausgangssignal um, beispielsweise in dem ein Stromkreis geschlossen bzw. geöffnet wird, oder ein Spannungsimpuls abgegeben wird. Weitere Ausbildungen der Kontakterfassungseinrichtung 16 ermöglichen eine spezifischere Erfassung des Gewebes, insbesondere der Haut. Für eine detaillierte Beschreibung der Vorteile der einzelnen Ausbildungen wird auf die obige Beschreibung verwiesen.

Die Kontakterfassungseinrichtung ist jedoch insbesondere derart ausgebildet, dass eine zuverlässige Erfassung der Zuordnung der Halte- bzw. Tragvorrichtung 3 zu einer Person sicher gestellt ist, ohne dass dadurch die Bewegungsfreiheit des Trägers eingeschränkt wird.

Eine ganz besonders vorteilhafte Weiterbildung erhält man dadurch, dass die Kommunikationsverbindung 9 durch die Haut der Person gebildet ist. Da der erfindungsgemäße Datenspeicher bevorzugt direkten Kontakt mit der Hautoberfläche hat, ist diese Ausbildung insbesondere dadurch von Vorteil, dass prinzipiell die gesamte Person als Sende- und Empfangseinrichtung des mobilen Datenspeichers fungiert. Insbesondere ist es somit der Kommunikationsgegenstelle 10 möglich, völlig unbemerkt für Dritte einen datentechnischen Kontakt mit dem mobilen Datenspeicher 1 herstellen zu können. Mögliche Ausbildungen dafür sind in den nachfolgenden Figuren detaillierter beschrieben.

Das Datenspeichermodul 2 ist bevorzugt an der Halte- bzw. Tragvorrichtung 2 angeordnet bzw. in dieser integriert, sodass die eigentliche Funktion der Halte- bzw. Tragvorrichtung im Wesentlichen unverändert bleibt und dass insbesondere die Halte- bzw. Tragvorrichtung 3 nicht als mobiler Datenspeicher augenscheinlich erkennbar wird.

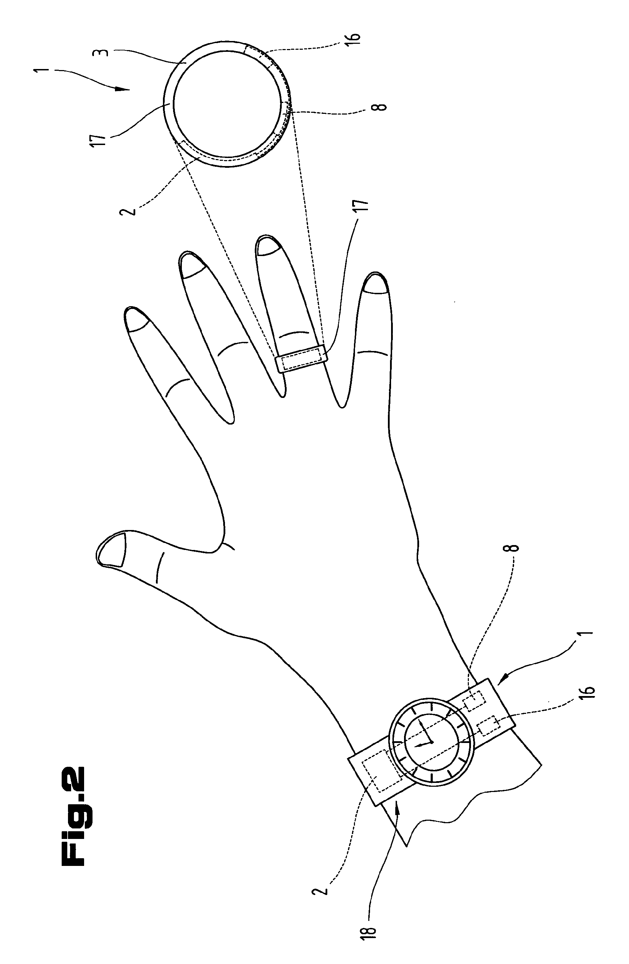

Fig. 2 zeigt zwei mögliche Ausbildungen des erfindungsgemäßen mobilen Datenspeichers 1. Beispielsweise kann die Halte- bzw. Tragvorrichtung 3 durch einen Fingerring 17 gebildet sein, wobei im Material des Rings das Datenspeichermodul 2 sowie die Kommunikationsschnittstelle 8 und die Kontakterfassungseinrichtung 16 angeordnet sind. Bei der bevorzugten Ausbildung der Kommunikationsverbindung durch die Haut der Person ist die Kommunikationsschnittstelle 8 derart angeordnet, dass ein zuverlässiger Kontakt mit dem Finger der Person gewährleistet ist, ohne den Fingerumfang zu stark einzuschnüren. Andererseits muss der Durchmesser des Rings derart gewählt sein, dass bei Abstreifen des Rings, insbesondere beim Bewegen über ein Fingergelenk, eine ausreichende Kraft auf die Kontakterfassungseinrichtung 16 ausgeübt wird, dass ein Kontaktgabeelement anspricht und ein entsprechendes Signal bereit stellt. Bei einer nicht mechanisch wirkenden Kontakterfassungseinrichtung ist jedenfalls sicher zu stellen, dass ein Abstreifen zu einem Verlust der Zuordnung führt und insbesondere nicht dadurch manipuliert werden kann, dass der Ring sofort auf einen Finger einer zweiten Person übergestreift wird.

Es ist jedoch auch möglich, den erfindungsgemäßen mobilen Datenspeicher 1 manschettenartig, beispielsweise als Armband in der Form einer Armbanduhr 18 auszubilden. Für einen Dritten tritt die augenscheinliche Funktion als Schmuckgegenstand bzw. Zeitmesseinrichtung in den Vordergrund, das integriert angeordnete Datenspeichermodul 2 mit der Kommunikationsschnittstelle 8 sowie der Kontakterfassungseinrichtung 16 bleibt verborgen. Bei dieser Ausbildung kann beispielsweise die Kontakterfassungseinrichtung 16 durch den Verschluss des Armreifs gebildet sein.

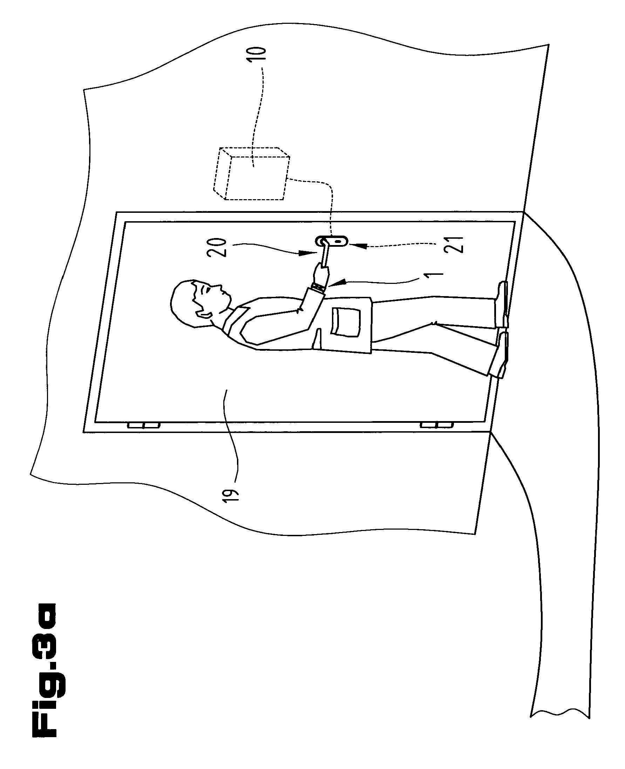

Die Fig. 3a bis 3c zeigen verschiedene Möglichkeiten, wie der erfindungsgemäße mobile Datenspeicher ausgelesen werden kann, um so beispielsweise den Zutritt zu Einrichtungen zu sichern.

Fig. 3a zeigt beispielsweise eine Zutrittskontrolle, bei der eine Zutrittssicherungseinrichtung 19 nur von einem autorisierten Benutzer entriegelt werden kann. Der Benutzer trägt beispielsweise den erfindungsgemäßen mobilen Datenspeicher 1 am Körper, wobei insbesondere beim Berühren einer Vorrichtung der Zutrittssicherung, beispielsweise einem Türgriff 20, die Kommunikationsverbindung hergestellt wird und die Kommunikationsgegenstelle 10 auf den mobilen Datenspeicher 1 zugreifen kann und beispielsweise im Halbleiterspeicher hinterlegte Zugriffsberechtigungen auslesen kann. Bei Vergleich mit Referenzmerkmalen und erfolgreicher Übereinstimmung wird die Verriegelung 21 frei gegeben und dem Benutzer der Zutritt gestattet. Für einen zufälligen Beobachter ist es nun nicht erkennbar, aufgrund welchen Merkmals einem Benutzer der Zutritt gestattet wird.

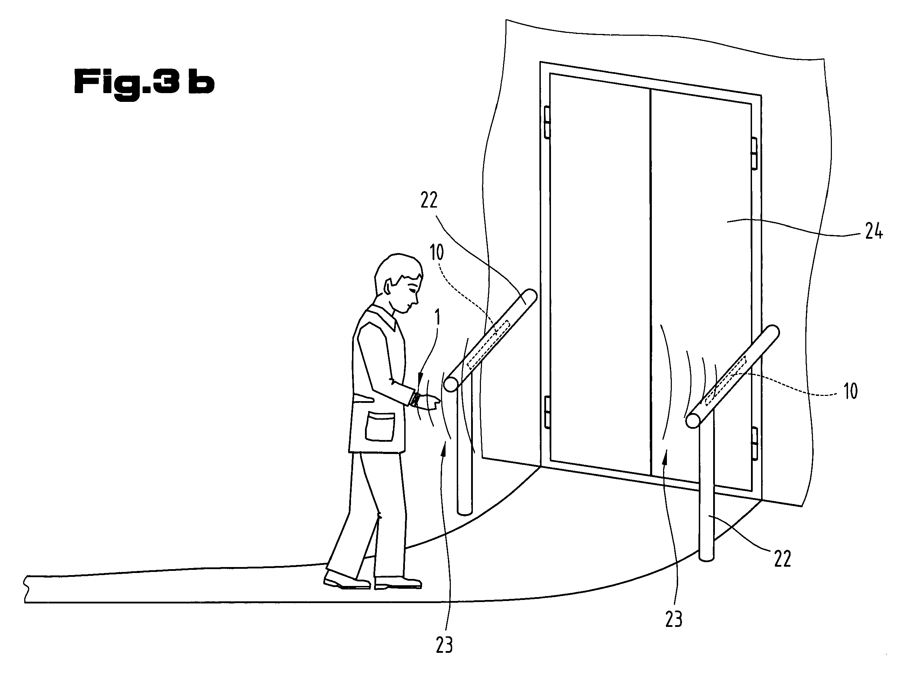

Fig. 3b zeigt ein ähnliches Zutrittssicherungssystem, bei dem ebenfalls wiederum ein Benutzer den mobilen Datenspeicher 1 am Körper angeordnet trägt und eine Erfassungseinrichtung 22 passiert. Von der Erfassungseinrichtung, insbesondere von der Kommunikationsgegenstelle 10, wird ein Nahfeld, insbesondere ein elektromagnetisches Nahfeld 23 ausgesendet, welches von der Kommunikationsschnittstelle des Datenspeichermoduls aufgefangen und ausgewertet wird. Da mittels des Nahfelds 23 bevorzugt Daten und elektrische Energie übertragen wird, kann somit bei Aufenthalt des mobilen Datenspeichers 1 im Nahfeld 23 ausreichend elektrischer Energie übertragen werden, um den mobilen Datenspeicher während des Erfassungsvorgangs mit elektrischer Energie zu versorgen. Die Identifikation bzw. Authentifikation der Person erfolgt ähnlich wie zuvor beschrieben, wobei wiederum nach erfolgreicher Identifikation die Zutrittssicherungseinrichtung 24 entriegelt wird und dem Benutzer Zutritt gestattet wird.

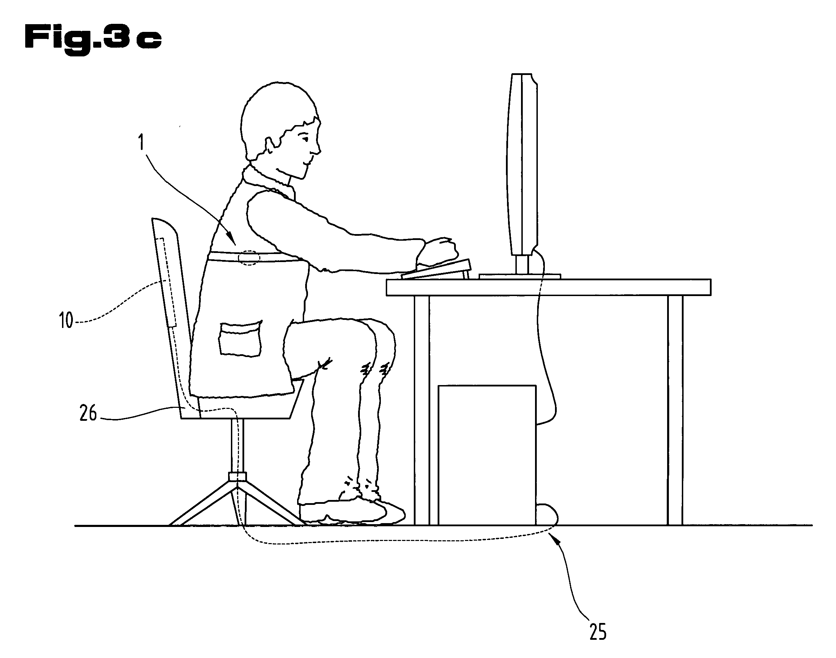

Fig. 3c zeigt eine weitere Ausbildung, bei der der Benutzer den mobilen Datenspeicher 1, beispielsweise als Brustgurt trägt. Der Benutzer kann nun vor einer gesicherten Datenverarbeitungseinrichtung 25 Platz nehmen, beispielsweise in einem Sitzmöbel 26, wobei in diesem Sitzmöbel die Kommunikationsgegenstelle 10 integriert angeordnet ist. Die Kommunikationsgegenstelle 10 liest die hinterlegten Merkmale aus dem mobilen Datenspeicher aus und nach Vergleich und erfolgreicher Übereinstimmung wird die Datenverarbeitungseinrichtung 25 für diesen Benutzer frei gegeben.

Es ist bspw. auch möglich, über die Kommunikationsgegenstelle 10 Informationseinheiten von der Datenverarbeitungseinrichtung 25 auf den mobilen Datenspeicher 1 zu übertragen, ohne dass dafür der Datenspeicher mit der Datenverarbeitungseinrichtung verbunden werden muss.

Eine weitere Steigerung der Sicherung der Daten am mobilen Datenspeicher kann beispielsweise dadurch erreicht werden, dass zusätzlich zur Anordnung des mobilen Datenspeichers auf einem Körperteil, vom mobilen Datenspeicher Vitalzeichen des Trägers erfasst werden. Somit kann eindeutig sichergestellt werden, dass eine lebende Person mit einem korrekt zugeordneten mobilen Datenspeicher von der Kommunikationsgegenstelle erfasst wurde.

Die Ausführungsbeispiele zeigen mögliche Ausführungsvarianten des mobilen Datenspeichers, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend daraufhingewiesen, dass zum besseren Verständnis des Aufbaus des mobilen Datenspeichers diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 2 und 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Mobiler Datenspeicher
- 2: Datenspeichermodul
- 3: Halte- bzw. Tragvorrichtung
- 4: Halbleiterspeicher
- 5: Zugriffssteuerung

- 6: Zuordnungsüberwachungsmodul
- 7: Kommunikationsmodul
- 8: Kommunikationsschnittstelle
- 9: Kommunikationsverbindung, Drahtlose Kommunikationsverbindung
- 10: Kommunikationsgegenstelle

- 11: Elektrischer Energiespeicher
- 12: Elektrischer Energiespeicher
- 13: Inhaltsverzeichnis
- 14: Informationseinheiten
- 15: Löschvorrichtung

- 16: Kontakterfassungseinrichtung
- 17: Fingerring
- 18: Armband, Armreif, Armbanduhr
- 19: Tür, Zutrittssicherungseinrichtung
- 20: Griff

- 21: Verriegelung
- 22: Erfassungseinrichtung
- 23: Nahfeld
- 24: Zutrittssicherungseinrichtung
- 25: Datenverarbeitungseinrichtung

- 26: Sitzmöbel

## Patentansprüche

1. Mobiler Datenspeicher (1), umfassend ein Datenspeichermodul (2) und eine Halte- bzw. Tragvorrichtung (3), wobei das Datenspeichermodul (2) einen nicht-flüchtigen, wiederbeschreibbaren Halbleiterspeicher (4) und eine Zugriffssteuerung (5) mit einem Kommunikationsmodul (7) aufweist, wobei ferner das Kommunikationsmodul (7) mit einer Kommunikationsschnittstelle (8) verbunden ist, **dadurch gekennzeichnet, dass** das Datenspeichermodul (2) in die Halte- bzw. Tragvorrichtung (3) integriert ist und dass die Halte- bzw. Tragvorrichtung (3) eine Kontakterfassungseinrichtung (16) aufweist, ferner das Datenspeichermodul (2) ein Zuordnungsüberwachungsmodul (6) aufweist, das zur Auswertung der Kontakterfassungseinrichtung (16) ausgebildet ist und das mit dem Halbleiterspeicher (4) und/oder mit der Zugriffssteuerung (5) verbunden ist.

2. Mobiler Datenspeicher nach Anspruch 1, **dadurch gekennzeichnet, dass** die Halte- bzw. Tragvorrichtung (3) durch einen Gegenstand des täglichen Gebrauchs, insbesondere einen Schmuckgegenstand, gebildet ist.

3. Mobiler Datenspeicher nach Anspruch 1 oder 2, **dadurch gekennzeichnet, dass** die Halte- bzw. Tragvorrichtung (3) durch eine manschettenartige Vorrichtung gebildet ist.

4. Mobiler Datenspeicher nach einem der Ansprüche 1 bis 3, **dadurch gekennzeichnet, dass** die Kontakterfassungseinrichtung (16) einen Schaltkontakt aufweist.

5. Mobiler Datenspeicher nach einem der Ansprüche 1 bis 4, **dadurch gekennzeichnet, dass** die Kontakterfassungseinrichtung (16) eine dielektrische Messvorrichtung aufweist.

6. Mobiler Datenspeicher nach einem der Ansprüche 1 bis 5, **dadurch gekennzeichnet, dass** die Kontakterfassungseinrichtung (16) eine optische Transmissions- und/oder Reflexionsmesseinrichtung aufweist.

7. Mobiler Datenspeicher nach einem der Ansprüche 1 bis 6, **dadurch gekennzeichnet, dass** die Kontakterfassungseinrichtung (16) durch einen piezoelektrischen Signalgeber gebildet ist.

8. Mobiler Datenspeicher nach einem der Ansprüche 1 bis 7, **dadurch gekennzeichnet, dass** der Halbleiterspeicher (4) eine Einrichtung (15) aufweist, die zum selbsttätigen Löschen des Speicherinhalts ausgebildet ist.

9. Mobiler Datenspeicher nach einem der Ansprüche 1 bis 8, **dadurch gekennzeichnet, dass** der Halbleiterspeicher (4) als elektrisch löschbarer Schreiblesespeicher ausgebildet ist.

10. Mobiler Datenspeicher nach einem der Ansprüche 1 bis 9, **dadurch gekennzeichnet, dass** das Zuordnungsüberwachungsmodul (6) einen Speicher (12) für elektrische Energie aufweist.

11. Mobiler Datenspeicher nach einem der Ansprüche 1 bis 10, **dadurch gekennzeichnet, dass** das Zuordnungsüberwachungsmodul (6) zur Abgabe eines Spannungsimpulses ausgebildet ist.

12. Mobiler Datenspeicher nach einem der Ansprüche 1 bis 11, **dadurch gekennzeichnet, dass** die Kommunikationsschnittstelle (8) zum Aufbau einer drahtlosen Kommunikationsverbindung (9) mit einer Kommunikationsgegenstelle (10) ausgebildet ist.

13. Mobiler Datenspeicher nach Anspruch 12, **dadurch gekennzeichnet, dass** die drahtlose Kommunikationsverbindung (9) durch die Oberfläche der Haut einer Person gebildet ist.

14. Mobiler Datenspeicher nach Anspruch 12, **dadurch gekennzeichnet, dass** die drahtlose Kommunikationsverbindung (9) durch eine Hochfrequenzfunkverbindung gebildet ist.

15. Mobiler Datenspeicher nach einem der Ansprüche 1 bis 14, **dadurch gekennzeichnet, dass** die Kommunikationsschnittstelle (8) zur Übertragung von Daten und elektrischer Energie ausgebildet ist.

16. Mobiler Datenspeicher nach einem der Ansprüche 1 bis 15, **dadurch gekennzeichnet, dass** das Datenspeichermodul (2) einen Speicher (11) für elektrische Energie aufweist.

17. Mobiler Datenspeicher nach einem der Ansprüche 1 bis 16, **dadurch gekennzeichnet, dass** das Datenspeichermodul (2) überwiegend durch organische Halbleiterbauteile gebildet sind.

18. Mobiler Datenspeicher nach einem der Ansprüche 1 bis 17, **dadurch gekennzeichnet, dass** im Datenspeichermodul ein personenbezogenes Referenzmerkmal hinterlegt ist.

19. Mobiler Datenspeicher nach einem der Ansprüche 1 bis 18, **dadurch gekennzeichnet, dass** im Datenspeichermodul eine Abfolge personenbezogener Referenzmerkmale hinterlegt ist.

20. Verfahren zur personenbezogenen Hinterlegung von Information auf einem mobilen Datenspeicher nach einem der Ansprüche 1 bis 19, wobei von einer Kommunikationsgegenstelle über eine Kommunikationsschnittstelle auf am Datenspeicher hinterlegte Information zugegriffen werden kann, **dadurch gekennzeichnet, dass** dass von der Kontakterfassungseinrichtung (16) der Halte- bzw. Tragvorrichtung (3) ein Kontakt der Kontakterfassungseinrichtung (16) mit der Hautoberfläche einer Person ermittelt wird und bei Erkennen eines Kontaktverlustes, ein Zugriff auf die im Datenspeicher (2) hinterlegte Information verhindert wird.

21. Verfahren nach Anspruch 20, **dadurch gekennzeichnet, dass** bei Verlust der Zuordnung, die am Datenspeicher hinterlegte Information selbsttätig gelöscht wird.

22. Verfahren nach Anspruch 20 oder 21, **dadurch gekennzeichnet, dass** bei Verlust der Zuordnung, vor einem Zugriff auf die Information, eine Personenauthentifikation durchgeführt wird.

23. Verfahren nach einem der Ansprüche 20 bis 22, **dadurch gekennzeichnet, dass** bei Verlust der Zuordnung, der Zugriff auf die hinterlegte Information verhindert wird.

## Claims

1. A mobile data memory (1), comprising a data memory module (2) and a holding or carrying device (3), wherein the data memory module (2) has a non-volatile, re-writeable semiconductor memory (4) and an access controller (5) with a communication module (7), wherein, furthermore, the communication module (7) is connected to a communication interface (8), **characterized in that** the data memory module (2) is integrated in the holding or carrying device (3) and that the holding or carrying device (3) has a contact detection unit (16), and that, furthermore, the data memory module (2) has an assignment monitoring module (6) which is configured for evaluating the contact detection unit (16) which is connected to the semiconductor memory (4) and/or the access controller (5).

2. The mobile data memory according to claim 1, **characterized in that** the holding or carrying device (3) is constituted by an object of daily use, in particular an item of jewelry.

3. The mobile data memory according to claim 1 or 2, **characterized in that** the holding or carrying device (3) is constituted by a cuff-type device.

4. The mobile data memory according to any one of claims 1 to 3, **characterized in that** the contact detection unit (16) has a switch contact.

5. The mobile data memory according to any one of claims 1 to 4, **characterized in that** the contact detection unit (16) has a dielectric measuring device.

6. The mobile data memory according to any one of claims 1 to 5, **characterized in that** the contact detection unit (16) has an optical transmission and/or reflection measuring unit.

7. The mobile data memory according to any one of claims 1 to 6, **characterized in that** the contact detection unit (16) is constituted by a piezoelectric signal transmitter.

8. The mobile data memory according to any one of claims 1 to 7, **characterized in that** the semiconductor memory (4) has a device (15) configured to automatically delete the memory content.

9. The mobile data memory according to any one of claims 1 to 8, **characterized in that** the semiconductor memory (4) is configured as an electrically deletable read/write memory.

10. The mobile data memory according to any one of claims 1 to 9, **characterized in that** the assignment monitoring module (6) has a storage (12) for electrical energy.

11. The mobile data memory according to any one of claims 1 to 10, **characterized in that** the assignment monitoring module (6) is configured for outputting a voltage pulse.

12. The mobile data memory according to any one of claims 1 to 11, **characterized in that** the communication interface (8) is configured to establish a wireless communication link (9) with a communication center (10).

13. The mobile data memory according to claim 12, **characterized in that** the wireless communication link (9) is formed by the surface of the skin of a person.

14. The mobile data memory according to claim 12, **characterized in that** the communication link (9) is formed by a high-frequency radio link.

15. The mobile data memory according to any one of claims 1 to 14, **characterized in that** the communication interface (8) is configured to transmit data and electrical energy.

16. The mobile data memory according to any one of claims 1 to 15, **characterized in that** the data memory module (2) has a storage (11) for electrical energy.

17. The mobile data memory according to any one of claims 1 to 16, **characterized in that** the data memory module (2) is predominantly made up of organic semiconductor components.

18. The mobile data memory according to any one of claims 1 to 17, **characterized in that** a person-related reference feature is stored in the data memory module.

19. The mobile data memory according to any one of claims 1 to 18, **characterized in that** a series of person-related features is stored in the data memory module.

20. A method of storing information relating to a person in a mobile data memory according to any one of claims 1 to 19, wherein a communication center is able to access the information stored on the data memory via a communication interface, **characterized in that** the contact detection unit (16) of the holding or cariying device (3) detects a contact of the contact detection unit (16) with the surface of a person's skin, and upon detection of a loss of contact, access to the information stored in the data memory (2) is prevented.

21. The method according to claim 20, **characterized in that** upon loss of the assignment, the information stored in the data memory is automatically deleted.

22. The method according to claim 20 or 21, **characterized in that** upon loss of the assignment, authenticating a person is performed before allowing access to the stored information.

23. The method according to any one of claims 20 to 22, **characterized in that** upon loss of the assignment, access to the stored information is prevented.

## Revendications

1. Mémoire de données mobile (1) comprenant un module de mémoire de données (2) et un dispositif de maintien ou de support (3), le module de mémoire de données (2) comprenant une mémoire à semi-conducteur (4) non volatile réinscriptible et une commande d'accès (5) avec un module de communication (7), le module de communication (7) étant en outre relié à une interface de communication (8), **caractérisée en ce que** le module de mémoire de données (2) est intégré dans le dispositif de maintien ou de support (3) et **en ce que** le dispositif de maintien ou de support (3) comprend un dispositif de détection de contact (16), le module de mémoire de données (2) comprenant en outre un module de surveillance d'attribution (6) qui est conçu pour l'analyse du dispositif de détection de contact (16) et qui est relié avec la mémoire à semi-conducteur (4) et/ou la commande d'accès (5).

2. Mémoire de données mobile selon la revendication 1, **caractérisée en ce que** le dispositif de maintien ou de support (3) est constitué d'un objet à usage quotidien, plus particulièrement un bijou.

3. Mémoire de données mobile selon la revendication 1 ou 2, **caractérisée en ce que** le dispositif de maintien ou de support (3) est constitué d'un dispositif en forme de manchette.

4. Mémoire de données mobile selon l'une des revendications 1 à 3, **caractérisée en ce que** le dispositif de détection de contact (16) comprend un contact à commutation.

5. Mémoire de données mobile selon l'une des revendications 1 à 4, **caractérisée en ce que** le dispositif de détection de contact (16) comprend un dispositif de mesure diélectrique.

6. Mémoire de données mobile selon l'une des revendications 1 à 5, **caractérisée en ce que** le dispositif de détection de contact (16) comprend un dispositif de mesure de transmission optique et/ou un dispositif de mesure de réflexion optique.

7. Mémoire de données mobile selon l'une des revendications 1 à 6, **caractérisée en ce que** le dispositif de détection de contact (16) est constitué d'un générateur de signaux piézo-électrique.

8. Mémoire de données mobile selon l'une des revendications 1 à 7, **caractérisée en ce que** la mémoire à semi-conducteur (4) comprend un dispositif (15) qui est conçu pour l'effacement automatique du contenu de la mémoire.

9. Mémoire de données mobile selon l'une des revendications 1 à 8, **caractérisée en ce que** la mémoire à semi-conducteur (4) est conçue comme une mémoire à lecture/écriture effaçable électriquement.

10. Mémoire de données mobile selon l'une des revendications 1 à 9, **caractérisée en ce que** le module de surveillance d'attribution (6) comprend une mémoire (12) pour l'énergie électrique.

11. Mémoire de données mobile selon l'une des revendications 1 à 10, **caractérisée en ce que** le module de surveillance d'attribution (6) est conçu pour l'émission d'une impulsion de tension.

12. Mémoire de données mobile selon l'une des revendications 1 à 11, **caractérisée en ce que** l'interface de communication (8) est conçue pour une communication sans fil (9) avec un destinataire de communication (10).

13. Mémoire de données mobile selon la revendication 12, **caractérisée en ce que** la liaison de communication sans fil (9) est constituée par la surface de la peau d'une personne.

14. Mémoire de données mobile selon la revendication 12, **caractérisée en ce que** la liaison de communication sans fil (9) est constituée par une liaison radio haute fréquence.

15. Mémoire de données mobile selon l'une des revendications 1 à 14, **caractérisée en ce que** l'interface de communication (8) est conçue pour la transmission de données et d'énergie électrique.

16. Mémoire de données mobile selon l'une des revendications 1 à 15, **caractérisée en ce que** le module de mémoire de données (2) comprend une mémoire (11) pour l'énergie électrique.

17. Mémoire de données mobile selon l'une des revendications 1 à 16, **caractérisée en ce que** le module de mémoire de données (2) est constitué principalement de composants semi-conducteurs organiques.

18. Mémoire de données mobile selon l'une des revendications 1 à 17, **caractérisée en ce que**, dans le module de mémoire de données, est enregistrée une caractéristique de référence spécifique à une personne.

19. Mémoire de données mobile selon l'une des revendications 1 à 18, **caractérisée en ce que**, dans le module de mémoire de données, est enregistrée une série de caractéristiques de référence spécifiques à des personnes.

20. Procédé d'enregistrement spécifique à des personnes d'informations sur une mémoire de données mobile selon l'une des revendications 1 à 19, un destinataire de communication pouvant accéder, par l'intermédiaire d'une interface de communication, à des informations enregistrées dans la mémoire de données, **caractérisé en ce que** le dispositif de détection de contact (16) du dispositif de maintien ou du support (3) détecte un contact du dispositif de détection de contact (16) avec la surface de la peau d'une personne et, lors de la détection d'une perte de contact, un accès aux informations enregistrées dans la mémoire de données (2) est empêché.

21. Procédé selon la revendication 20, **caractérisé en ce que**, lors de la perte de l'attribution, les informations enregistrées dans la mémoire de données sont automatique effacées.

22. Procédé selon la revendication 20 ou 21, **caractérisé en ce que**, lors de la parte de l'attribution, avant un accès aux informations, une authentification de personnes est effectuée.

23. Procédé selon l'une des revendications 20 à 22, **caractérisé en ce que**, lors de la parte de l'attribution, l'accès aux informations enregistrées est empêché.
